# EUROPÄISCHE PATENTSCHRIFT

(11) **EP 1 955 584 B1**
(45) Veröffentlichungstag und Bekanntmachung des Hinweises auf die Patenterteilung: **16.06.2010**
(21) Anmeldenummer: 07119707.3
(22) Anmeldetag: 31.10.2007
(51) Int. Cl.: A01F 12/52

(54) **Mähdrescher**
Combine harvester
Moissonneuse-batteuse

(30) Priorität: 12.02.2007 DE 102007007385
(43) Veröffentlichungstag der Anmeldung: 13.08.2008
(73) Patentinhaber: CLAAS Selbstfahrende Erntemaschinen GmbH, 33428 Harsewinkel (DE)
(72) Erfinder: Dammann, Martin, 33428 Harsewinkel (DE); Kleffmann, Bernd, 33428 Harsewinkel (DE); Deppe, Markus, 33790 Halle (DE)

(56) Entgegenhaltungen:
- DE-A1- 2 445 045
- US-A- 3 757 797
- US-A- 4 441 511

## Beschreibung

Die Erfindung betrifft einen Mähdrescher nach dem Oberbegriff des Anspruchs 1.

### Beschreibung

Der die Reinigungseinheit eines Mähdreschers verlassende und als Überkehrgutstrom bezeichnete Massestrom besteht zum Einen aus Teilen des Erntegutes, die schwerer sind als die Spreu und auch schwerer als die Körner selbst, so dass sie nicht vom Reinigungsgebläse aus dem Siebkasten geblasen werden können, Das sind unausgedroschene Ähren oder ungenügend entgrannte Körner, die deshalb auf irgendeine Art nachgedroschen werden müssen. Zum Anderen befinden sich aber auch einzelne Körner in dem Überkehrgutstrom, Wenn deren Anteil in dem Überkehrgutstrom zu hoch ist, sind die Funktionsorgane fehlerhaft eingestellt und die Leistungsfähigkeit des Mähdreschers ist reduziert Deshalb ist die Überwachung des Überkehrgutstronis von besonderer Bedeutung, damit der Mähdrescher am Optimum seiner Leistungsfähigkeit betrieben werden kann.

Aus dem Stand der Technik sind eine Reihe von Sensoranordnungen bekannt, die die Aufgabe erfüllen sollen, die Menge und/oder die Zusammensetzung des Überkehrgutstroms zu erfassen, um in Abhängigkeit der erfassten Werte die Einstellungen der Funktionsorgane des Mähdreschers zu beeinflussen. Beispielhaft sei hier auf die DE 24 45 045 A1 verwiesen, bei der mittels einer Messeinrichtung die Schichthöhen des Überkehrgutstromes in der Fördereinrichtung ermittelt wird, in der Praxis hat sich gezeigt, dass diese aber auch weitere aus dem Stand der Technik bekannte Sensoreinrichtungen zur Erfassung der Eigenschaften des Überkehrgutstroms nur unbefriedigende Ergebnisse liefern, so dass ein mit derartigen Sensoreinrichtungen ausgerüsteter Mähdrescher nur bedingt an der Grenze seiner Leistungsfähigkeit betrieben werden kann. Zudem sind derartige Sensoreinrichtungen in der Entwicklung, durch die benötigten Bauelemente und durch ihren Betrieb sehr kostenintensiv, was die Wirtschaftlichkeit des Mähdreschers negativ beeinflusst.

Da Mähdrescher In der Regel von sehr gut ausgebildeten und erfahrenen Fahrern gesteuert werden, die durch visuelle Überprüfung des Überkehrgutstroms einen sehr genauen Rückschluss auf die Veränderung der Einstellungen der Funktionsorgane des Mähdreschers ziehen können, besteht bei in der Praxis sehr weit verbreiteten Mähdreschern die Möglichkeit, den Überkehrgutstrom einzusehen. Diese Variante der Überkehrkontrolle ist sehr kostengünstig, so dass ein wirtschaftlicher Betrieb des Mähdreschers ermöglicht wird. Als Beispiel für derartige Mähdrescher ist der Mähdrescher der Firma Claas mit der Typenbezeichnung MEGA350 anzusehen, wie er im Firmenprospekt mit dem Druckvermerk "07/106 (Be) deutsch 170/000 248 683.3" dargestellt ist. Um bei einem derartigen Mähdrescher den Überkehrgutstrom einzusehen, ist die seitliche rechte Tür der Fahrerkabine und zusätzlich eine In dem Maschinengehäuse befindliche Klappe zu öffnen (siehe entsprechendes Bild auf Seite 12 des genannten Firmenprospektes). Nachteilig an einem derart aus der Praxis bekannten Mähdrescher ist es jedoch, dass der Fahrer den Überkehrgutstrom nicht direkt von seinem Fahrersitz aus eingehen kann, sondern er muss sich weit aus der rechten Kabinentür herausbeugen, was den sicheren und kontinuierlichen Fahrbetrieb des Mähdreschers gefährdet. Ein zusätzlicher Nachteil entsteht durch die zu öffnende rechte Tür der Fahrerkabine, was aufgrund der üblicherweise sehr staubigen, geräuschintensiven und wärmeintensiven Erntebedingungen unerwünscht ist und als hohe Belastung für den Fahrer anzusehen ist.

Aus der gattungsbildenden US 3,757,797 ist ein Mähdrescher gemäß dem Oberbegriff des Anspruches 1 bekannt. Die visuelle Überprüfung des Überkehrgutstromes wird dem Fahrer durch ein Glasfenster in der Rückwand der Fahrerkabine ermöglicht. Hierzu muss der Fahrer den Kopf um nahezu 180° nach hinten wenden, indem er zusätzlich auch den Rumpf mitschwenkt, damit er die Öffnung des Kanals auf der Rückseite der Fahrerkabine durch das Glasfenster einsehen kann. Als nachteilig hat sich gezeigt, dass der Fahrer über den Beobachtungszeitraum eine äußert unbequeme Körperhaltung einnehmen muss und zudem für diesen Zeitraum das vor ihm liegende Feld außer Acht lässt, was nicht unerhebliche Konsequenzen haben kann, da der Mähdrescher in dieser Zeit weiterfährt, um den Gutstrom nicht zu unterbrechen.

Die Aufgabe der vorliegende Erfindung besteht darin, einen Mähdrescher gemäß dem Oberbegriff des Anspruchs 1 derart weiterzubilden, dass eine einfache, kostengünstige, kontinuierliche und für den Fahrer unbelastende Überwachung des Überkehrgutstroms gewährleistet ist.

Diese Aufgabe wird erfindungsgemäß durch die kennzeichnenden Merkmale des Anspruchs 1 gelöst.

Dadurch, dass in einer Wandung der Fahrerkabine ein Sichtfenster zur direkten Einsicht auf den in der Fördereinrichtung befindlichen Oberkehrgutstrom angeordnet ist, ist die Menge und Zusammensetzung des Überkehrgutstroms für den Fahrer jederzeit und unproblematisch zu überwachen, ohne dass er seinen Fahrersitz verlassen muss. Ein zusätzlicher Vorteil besteht darin, dass die Fahrerkabine während des Ernteprozesses nicht geöffnet werden muss, so dass der Fahrer nicht den belastenden Umwelteinflüssen im Umfeld des Mähdreschers ausgesetzt wird.

Bei vorteilhaften Ausführungsformen der Erfindung ist das Sichtfenster in einem hinteren oder einem unteren oder einem seitlichen Bereich der Fahrerkabine angeordnet, so dass der Fahrer lediglich seinen Kopf verschwenken muss, um den Überkehrgutstrom einsehen und beurteilen zu können,

Um die Herstell- und Montagekosten für das Sichtfenster zu minimieren ist bei einer vorteilhaften Ausbildung der Erfindung das Sichtfenster einstückig mit einer seitlichen Tür oder einem seitlichen Fenster der Fahrerkabine ausgebildet, Bei einer weiteren vorteilhaften Ausbildung der Erfindung ist das Sichtfenster einstöckig mit einem Sichtfenster zur Einsicht in den Korntank ausgebildet.

Da durch die Förderung des Überkehrgutstroms in der Fördereinrichtung ein gewisser Anteil an Staub aufgewirbelt wird und das Sichtfenster dadurch verschmutzen könnte, ist dem Sichtfenster bei einer vorteilhaften Ausgestaltung der Erfindung auf der der Fördereinrichtung zugewandten Seite eine Reinigungseinrichtung zugeordnet.
Die Reinigungseinrichtung ist vorteilhaft als Wischelement zum Beispiel als hinlänglich bekannter Scheibenwischer und/oder als Bürstenelement ausgebildet.
Weiterhin besteht die Möglichkeit die Reinigungseinrichtung als Düsenelement für ein Reinigungsmedium auszubilden. Das Reinigungsmedium kann sowohl flüssig als auch gasförmig sein. Hier bietet es sich vorteilhaft an, als Reinigungsmedium die standardmäßig auf dem Mähdrescher zur Verfügung stehende Druckluft zu nutzen, Eine weitere Art zur Ausbildung der Reinigungseinrichtung besteht in der Möglichkeit, ein umlaufendes Folienband vor dem Sichtfenster anzuordnen, das jeweils während des Umlaufs an einem beispielsweise bürstenartigen Element entlang läuft und dadurch gereinigt wird.
Der Start der Reinigungseinrichtung kann manuell oder automatisch beispielweise periodisch erfolgen. Weiterhin besteht die Möglichkeit die Reinigungseinrichtung dauerhaft zu betrieben, so kann das Sichtfenster beispielsweise dauerhaft mit Druckluft beaufschlagt werden, so dass erst gar keine Verschmutzung entstehen kann.

Um das Sichtfenster auch bei zum Boden hin offenen Maschinengehäuse gegen Zerstörung und/oder Verschmutzung durch beispielsweise vom Fahrwerk abgegebenen Elementen wie Steinen und/oder Bodenteilen zu schützen, ist bei einer vorteilhaften Weiterbildung der Erfindung auf der der Fördereinrichtung zugewandten Seite unterhalb des Sichtfensters eine Abschirmeinrichtung angeordnet.

Zur Sicherstellung einer schnellen und einfachen Beurteilung der Menge und Zusammensetzung des Überkehrgutstroms durch den Fahrer des Mähdreschers ist dem Sichtfenster bei einer vorteilhaften Weiterbildung der Erfindung eine Beleuchtungseinrichtung zugeordnet, so dass auch bei Ernteeinsätzen in der Dunkelheit eine entsprechende Einflussnahme auf die Funktionsorgane in Abhängigkeit des Überkehrgutstroms vorgenommen werden kann, Vorteilhaft ist die Beleuchtungseinrichtung auf der der Fördereinrichtung zugewandten Seite des Sichtfensters angeordnet, um unerwünschten Reflektionen in dem Sichtfenster entgegenzuwirken,

Anhand der beigefügten Zeichnungen wird die Erfindung nachfolgend näher erläutert.
Es zeigen:
Fig. 1: eine schematisch dargestellte linke Seitenansicht eines Mähdreschers,
Fig. 2: eine schematisch dargestellte rechte Seitenansicht des Mähdreschers,
Fig. 3: eine schematisch dargestellte Forderansicht des Mähdreschers und
Fig. 4: eine perspektivische Detailansicht innerhalb der Fahrerkabine des Mähdreschers.

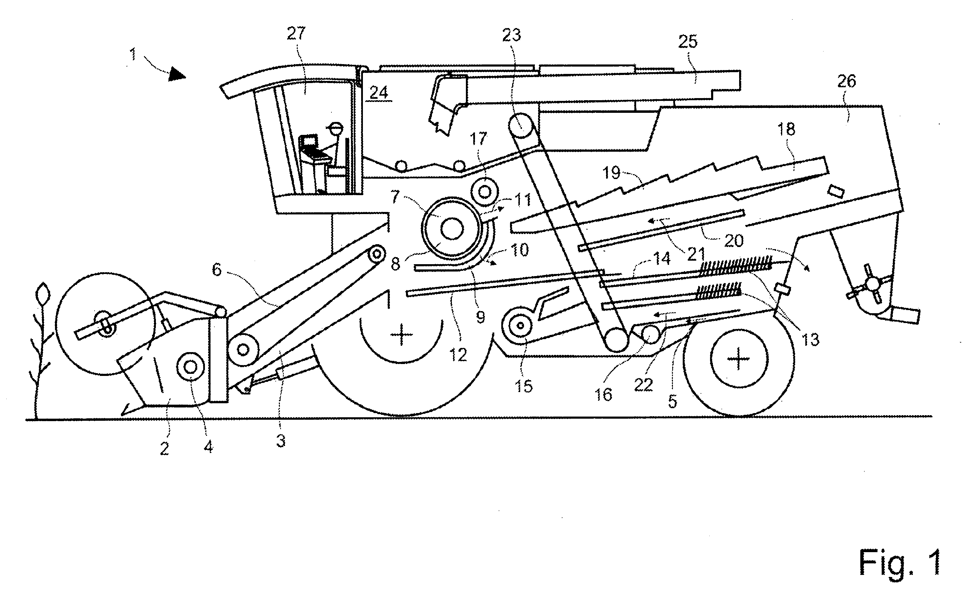

Der in Fig. 1 schematisch dargestellte Mähdrescher 1 besteht aus einem mit dem Fahrwerk verbundenen Traggestell, auf dem ein mehrteiliges Maschinengehäuse 26 befestigt ist. Um den Fahrer des Mähdreschers 1 vor belastenden Umwelteinflüssen zu schützen, ist im frontseitigen Bereich eine geschlossene Fahrerkabine 27 angeordnet. Der Mähdrescher 1 nimmt ein Getreideschneidwerk 2 auf, welches in an sich bekannter Weise mit dem Schrägförderer 3 des Mähdreschers 1 verbunden ist, Das Querfärderorgan 4 des Schneidwerkes 2 übergibt das Erntegut an den Schrägförderer 3, wobei dieser das Erntegut mittels umlaufendem Förderer 6 in seinem obenseitigen rückwärtigen Bereich an das Dreschwerk 7 des Mähdreschers 1 übergibt. !n dem ein- oder mehrtrommelig ausgeführten Dreschwerk 7 wird das Erntegut zwischen den Dreschtrommeln 8 und einem diese wenigstens teilweise ummantelnden Dreschkorb 9 hindurchgeführt und in zumindest zwei Teilströme 10,11 getrennt. Der erste Teilstrom 10 besteht im Wesentlichen aus Körnern , Kurzstroh und Spreu und wird über einen Vorbereitungsboden 12 unmittelbar einer aus verschiedenen Siebebenen 13 bestehenden Reinigungseinheit 14 zugeführt. Die Reinigungseinheit 14 nimmt zudem eine Gebläseeinheit 15 auf, die einen die Siebebenen 13 durchsetzenden Luftstrom generiert,
Der im rückwärtigen Bereich des Dreschwerks 7 aus diesem austretende weitere, im Wesentlichen aus Stroh und einem Restkornanteil bestehende Teilstrom 11 wird mittels einer Strohleittrommel 17 auf ein als Hordenschüttler 18 ausgeführtes Abscheideorgan 19 geleitet, Durch die Bewegung des Hordenschüttlers 18 wird ein großer Anteil der in der Strohschicht enthaltenen Körner 21 auf dem Hordenschüttler 18 abgeschieden und über einen sogenannten Rücklaufboden 20 und den Vorbereitungsboden 12 an die Reinigungseinheit 14 übergeben.
In der Reinigungseinheit 14 wird schließlich aus den in sie eingeleiteten verschiedenen Gutströmen 10, 21 ein gereinigter Kömerstrom 22 mittels Förderelevatoren 23 in einen Korntank 24 gefördert und dort zwischengespeichert Die Entleerung des Korntanks 24 erfolgt in der Regel mittels eines Korntankentleerförderers 25.
Der die Reinigungseinheit 14 zusätzlich verlassende und als Überkehrgutstrom 5 bezeichnete Massestrom besteht zum Einen aus Teilen des Erntegutes, die schwerer sind als die Spreu und auch schwerer als die Körner 21,22 selbst, so dass sie nicht von der Gebläseeinheit 15 aus dem Siebkasten geblasen werden können, Das sind unausgedroschene Ähren oder ungenügend entgrannte Körner, die deshalb erneut gedroschen werden müssen. Zum Anderen befinden sich aber auch einzelne Körner in dem Überkehrgutstrom 5. Der Überkehrgutstrom 5 wird durch eine in den nachfolgenden Figuren näher dargestellte Fördereinrichtung 16 dem Dreschwerk 7 erneut zugeführt,

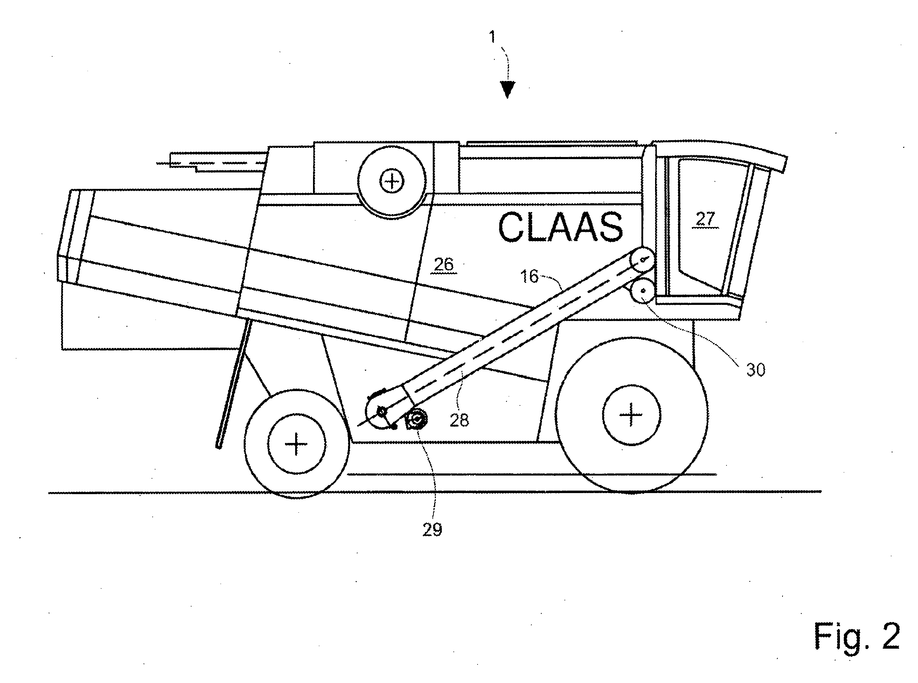

in Figur 2 ist die rechte Seite des Mähdreschers 1 ohne das Getreideschneidwerk schematisch dargestellt. Der im unteren Bereich des Mähdreschers 1 anfallende Überkehrgutstrom wird mittels einer aus einer Querschnecke 29, einem Förderelevator 28 und einer Zuführschnecke 30 bestehenden Fördereinrichtung 16 dem hier nicht dargestellten Dreschwerk zugeführt, Der Förderelevator 28 verläuft im wesentlichen von einem in Fahrtrichtung gesehen mittleren unteren Bereich des Maschinengehäuses 26 in Richtung der Fahrerkabine 27, Am oberen Punkt des Förderelevators 28 ist der Überkehrgutstrom durch ein hier nicht dargestelltes Sichtfenster hindurch von der Fahrerkabine 27 aus einsehbar, so dass der Fahrer die Funktionsorgane in Abhängigkeit der Masse und Zusammensetzung des Überkehrgutstroms einstellen kann,

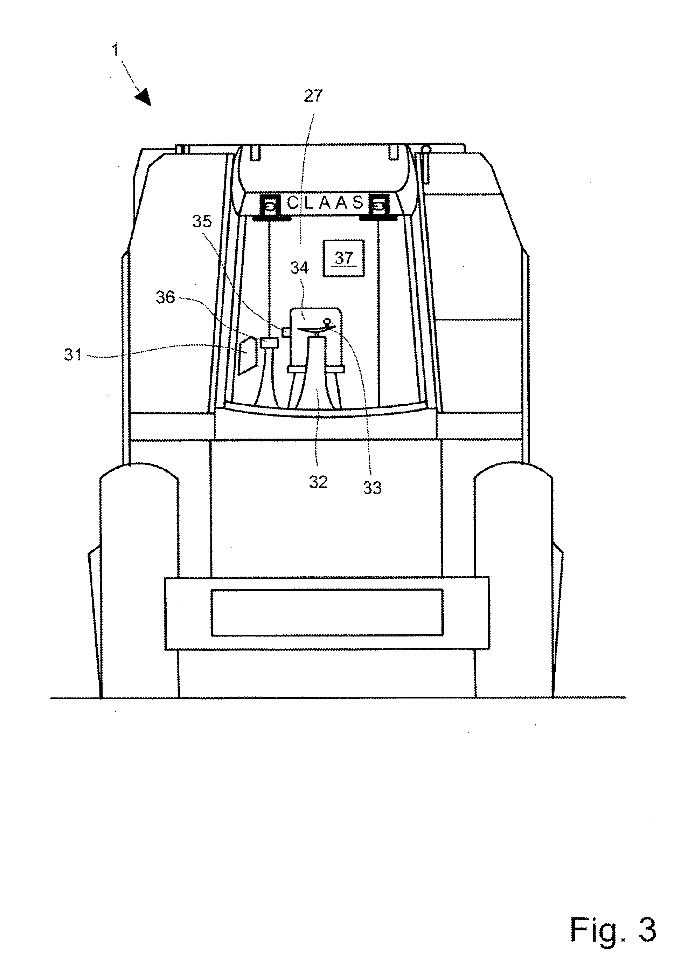

in Figur 3 ist die Vorderansicht des Mähdreschers 1 ohne das Getreideschneidwerk schematisch dargestellt, in der Fahrerkabine 27 ist ein auf einer Lenksäule 32 positioniertes Lenkrad 33, ein Fahrersitz 34 mit einer daran befestigten Armauflage 35 und eine Bedienkonsole 36 zur Einstellung der Funktionsorgane des Mähdreschers 1 angeordnet, In die hintere Wandung der Fahrerkabine 27 ist ein Sichtfenster 37 zur Einsicht in den Korntank integriert. In einem unteren seitlichen Bereich der Fahrerkabine 27 ist ein Sichtfenster 31 angeordnet, dass die direkte Einsicht auf den in der hier nicht dargestellten Fördereinrichtung befindlichen Überkehrgutstrom ermöglicht Somit kann der Fahrer, ohne seinen Fahrersitz 34 zu verlassen, durch einfaches verschwenken seines Kopfes jederzeit den Überkehrgutstrom einsehen und die Einstellung der Funktionsorgane bedarfsweise anpassen,

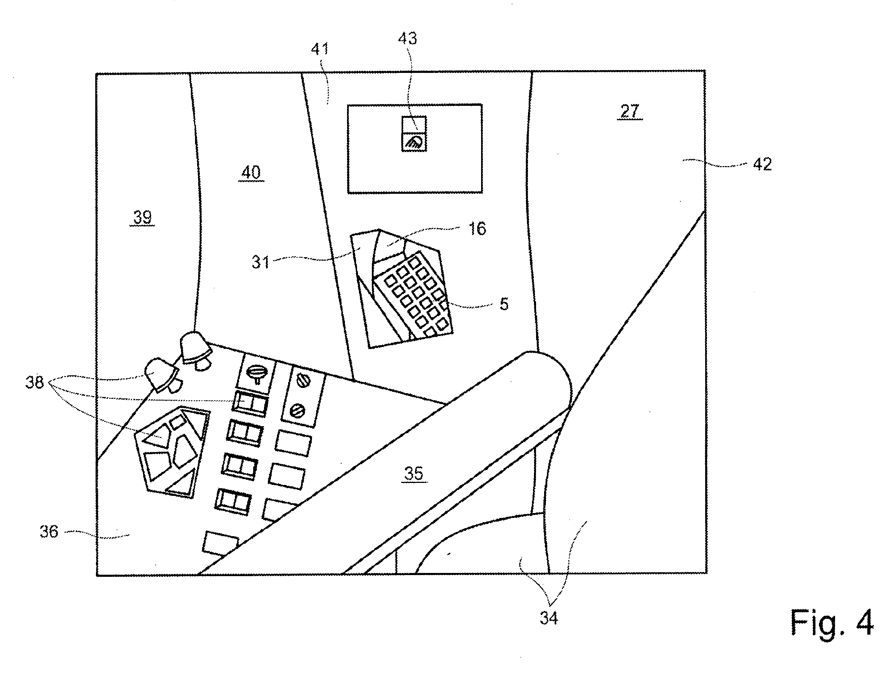

In Figur 4 ist der untere seitliche Bereich der Fahrerkabine 27 in einer perspektivischen Innenansicht dargestellt. Die Fahrerkabine 27 wird durch eine Frontscheibe 39, Seitenscheiben 40, seitliche Wandungen 41 und eine hintere Wandung 42 gebildet, wobei Einzelteile davon auch als zu öffnendes Fenster oder als Tür ausgebildet sein können. An dem in der Fahrerkabine 27 befindlichen Fahrersitz 34 ist eine Armauflage 35 befestigt, die ein angenehmes und ermüdungsfreies Fahren des Mähdreschers ermöglicht. In unmittelbarer Nahe der Armauflage 35 ist die Bedienkonsole 36 mit darauf angeordneten Schalt- und Einstellelementen 38 positioniert In der seitlichen Wandung 41 ist ein Sichtfenster 31 angeordnet, welches einen Einblick auf den in der Fördereinrichtung 16 befindlichen Überkehrgutstrom 5 ermöglicht Zur besseren Sichtbarkeit des Überkehrgutstroms 5 ist dem Sichtfenster 31 auf der der Fördereinrichtung 16 zugewandten Seite eine hier nicht dargestellte Beleuchtungseinrichtung zugeordnet, welche mittels eines entsprechenden Schalters 43 von der Fahrerkabine 27 aus ein- bzw. ausgeschaltet werden kann.

### Bezugszeichenliste,

- 1: Mähdrescher
- 2: Getreideschneidwerk
- 3: Schrägförderer
- 4: Querförderorgan
- 5: Überkehrgutstrom
- 6: Förderer
- 7: Dreschwerk
- 8: Dreschtrommel
- 9: Dreschkorb
- 10: Teilstrom
- 11: Teilstrom
- 12: Vorbereitungsboden
- 13: Siebebene
- 14: Reinigungseinheit
- 15: Gebläseeinheit
- 16: Fördereinrichtung
- 17: Strohleittrommel
- 18: Hordenschüttler
- 19: Abscheideorgan
- 20: Rücklaufboden
- 21: Körner
- 22: Körnerstrom
- 23: Förderelevator
- 24: Korntank
- 25: Korntankentleerförderer
- 26: Maschinengehäuse
- 27: Fahrerkabine
- 28: Förderelevator
- 29: Querschnecke
- 30: Zuführschnecke
- 31: Sichtfenster
- 32: Lenksäule
- 33: Lenkrad
- 34: Fahrersitz
- 35: Armauflage
- 36: Bedienkonsole
- 37: Sichtfenster
- 38: Schalt- und Einstellelemente.
- 39: Frontscheibe
- 40: Seitenscheibe
- 41: seitliche Wandung
- 42: hintere Wandung
- 43: Schalter

## Patentansprüche

1. Mähdrescher (1) mit einem Traggestell, einem auf dem Traggestell angeordneten Maschinengehäuse (26), einer auf dem Traggestell und/oder an dem Maschinengehäuse (26) angeordneten Fahrerkabine (27), einer Einrichtung zur Aufnahme des Ernteguts, zumindest einem Dreschwerk (7), zumindest einem Abscheideorgan (19), zumindest einer Reinigungseinheit. (14) und zumindest einer Fördereinrichtung (16) zur Rückführung des Oberkehrgutstroms (5) in den Dreschprozess, wobei zumindest das Dreschwerk (7), das Abscheideorgan (19), die Reinigungseinheit (14) und die Fördereinrichtung (16) in dem Maschinengehäuse (26) angeordnet sind, wobei in einer Wandung (41) der Fahrerkabine (27) ein Sichtfenster (31) zur direkten Einsicht auf den in der Fördereinrichtung (16) befindlichen Überkehrgutstrom (5) angeordnet ist,
**dadurch gekennzeichnet,**
**dass** das Sichtfenster (31) in einem unteren seitlichen Bereich der Fahrerkabine (27) angeordnet ist.

2. Mähdrescher (1) nach einem der vorstehenden Ansprüche, **dadurch gekennzeichnet, dass** das Sichtfenster (31) einstückig mit einer seitlichen Tür oder einem seitlichen Fenster der Fahrerkabine (27) ausgebildet ist.

3. Mähdrescher (1) nach einem der vorstehenden Ansprüche, **dadurch gekennzeichnet, dass** dem Sichtfenster 31 auf der der Fördereinrichtung (16) zugewandten Seite eine Reinigungseinrichtung zugeordnet ist.

4. Mähdrescher (1) nach Anspruch 3, **dadurch gekennzeichnet, dass** die Reinigungseinrichtung als Wischelement und/oder als Düsenelement für ein Reinigungsmedium und/oder als umlaufendes Folienband ausgebildet ist.

5. Mähdrescher (1) nach einem der vorstehenden Ansprüche, **dadurch gekennzeichnet, dass** auf der der Fördereinrichtung (16) zugewandten Seite unterhalb des Sichtfensters (31) eine Abschirmeinrichtung angeordnet ist.

6. Mähdrescher (1) nach einem der vorstehenden Ansprüche, **dadurch gekennzeichnet, dass** dem Sichtfenster (31) eine Beleuchtungseinrichtung zugeordnet ist.

7. Mähdrescher (1) nach Anspruch 6, **dadurch gekennzeichnet, dass** die Beleuchtungseinrichtung auf der der Fördereinrichtung (16) zugewandten Seite des Sichtfensters (31) angeordnet ist.

## Claims

1. A combine harvester (1) comprising a carrier frame, a machine housing (26) arranged on the carrier frame, a driver's cab (27) arranged on the carrier frame and/or at the machine housing (26), a device for picking up the crop material, at least one threshing mechanism (7), at least one separating member (19), at least one cleaning unit (14) and at least one conveyor device (16) for returning the tailings flow (5) to the threshing process, wherein at least the threshing mechanism (7), the separating member (19), the cleaning unit (14) and the conveyor device (16) are arranged in the machine housing (26), wherein arranged in a wall (41) of the driver's cab (27) is a viewing window (31) for directly viewing on to the tailings flow (5) in the conveyor device (16),
**characterised in that**
the viewing window (31) is arranged in a lower lateral region of the driver's cab (27).

2. A combine harvester (1) according to claim 1 **characterised in that** the viewing window (31) is formed in one piece with a side door or a side window of the driver's cab (27).

3. A combine harvester (1) according to one of the preceding claims **characterised in that** a cleaning device is associated with the viewing window (31) on the side towards the conveyor device (16).

4. A combine harvester (1) according to claim 3 **characterised in that** the cleaning device is in the form of a wiping element and/or a nozzle element for a cleaning medium and/or is in the form of a circulating film strip.

5. A combine harvester (1) according to one of the preceding claims **characterised in that** a shielding device is arranged on the side towards the conveyor device (16) beneath the viewing window (31).

6. A combine harvester (1) according to one of the preceding claims **characterised in that** a lighting device is associated with the viewing window (31).

7. A combine harvester (1) according to claim 6 **characterised in that** the lighting device is arranged on the side of the viewing window (31), that is towards the conveyor device (16).

## Revendications

1. Moissonneuse-batteuse (1) comprenant un bâti, un carter de machine (26) disposé sur le bâti, une cabine de conduite (27) disposé sur le bâti et/ou sur le carter de machine (26), un dispositif pour ramasser le produit récolté, au moins un mécanisme de battage (7), au moins un organe séparateur (19), au moins un ensemble de nettoyage (14) et au moins un dispositif d'amenage (16) pour ramener le flux de ôtons (5) dans le processus de battage, le mécanisme de battage (7), l'organe séparateur (19), l'ensemble de nettoyage (14) et le dispositif d'amenage (16) étant disposés dans le carter de machine (26), dans une paroi (41) de la cabine de conduite (27) étant disposé un hublot (31) offrant une vue directe sur le flux de ôtons (5) se trouvant dans le dispositif d'amenage (16), **caractérisée en ce que** le hublot (31) est disposé dans une zone latérale inférieure de la cabine de conduite (27).

2. Moissonneuse-batteuse (1) selon une des revendications précédentes, **caractérisée en ce que** le hublot (31) est conçu d'un seul tenant avec une porte latérale ou avec une fenêtre latérale de la cabine de conduite (27).

3. Moissonneuse-batteuse (1) selon une des revendications précédentes, **caractérisée en ce qu'**un dispositif de nettoyage est associé au hublot 31 sur le côté tourné vers le dispositif d'amenage (16).

4. Moissonneuse-batteuse (1) selon la revendication 3, **caractérisée en ce que** le dispositif de nettoyage est conformé en élément d'essuyage et/ou en élément formant buse pour un agent nettoyant et/ou en bande de film rotative.

5. Moissonneuse-batteuse (1) selon une des revendications précédentes, **caractérisée en ce qu'**un dispositif de protection est disposé sous le hublot (31) sur le côté tourné vers le dispositif d'amenage (16).

6. Moissonneuse-batteuse (1) selon une des revendications précédentes, **caractérisée en ce qu'**un dispositif d'éclairage est associé au hublot (31).

7. Moissonneuse-batteuse (1) selon la revendication 6, **caractérisée en ce que** le dispositif d'éclairage est disposé sur le côté du hublot (31) tourné vers le dispositif d'amenage (16).
